Europäisches Patentamt

(19) European Patent Office

Office européen des brevets

(11) Publication number: **0 058 030**
**A2**

(12) # EUROPEAN PATENT APPLICATION

(21) Application number: **82300500.4**

(22) Date of filing: **29.01.82**

(51) Int. Cl.³: **A 01 K 1/02**

(30) Priority: **06.02.81 GB 8103680**

(43) Date of publication of application:
**18.08.82 Bulletin 82/33**

(84) Designated Contracting States:
**BE CH DE FR IT LI NL SE**

(71) Applicant: **Spotmanor Limited**
**Vale Industrial Estate**
**Spilsby Lincolnshire, PE23 5HE(GB)**

(72) Inventor: **Shaw, John Charles Michael**
**Welton Vale House Welton-Le-Wold**
**Louth Lincolnshire(GB)**

(74) Representative: **Lister, David Anthony**
**APPLEYARD, LEES & CO. 15, Clare Road**
**Halifax West Yorkshire, HX1 2HY(GB)**

(54) **An improved rearing unit.**

(57) A rearing unit for animals such as piglets in the form of a closed body having first and second portions each provided with at least one cage or pen for housing the piglets. The unit is provided with heating means for heating air in or supplied to the first portion, air extraction means for withdrawing air therefrom and air flow control means for supplying at least part of the air withdrawn from the first portion to the second portion of the unit.

FIG.3.

EP 0 058 030 A2

- 1 -

## "An improved rearing unit"

This invention relates to rearing units for animals and more particularly, but not exclusively, to rearing units for animals such as pigs.

A rearing unit for animals such as piglets, in which the piglets are raised in an environment whose conditions of air temperature, air flow or ventilation and humidity are controlled so as to permit earlier weaning of the piglets is already known. One such unit is described in our British Patent No: 1,449,301 and consists of a closed rectangular body having cages disposed therein for containing the piglets. This unit includes air inlet and extraction means for varying and controlling the air flow through the unit and heating means for heating the incoming air, thus enabling the air temperature within the unit to be controlled. Facilities are also provided for removing liquid animal excreta from the unit in order to enable the level of humidity in the unit to be controlled.

It is usual after the piglets have been weaned and reach an age and size where they are less susceptible to disease, to transfer the piglets into a further separate unit where they can grow to a marketable size. One type of unit which could be utilised as a follow-on unit is described in our co-pending British Patent Application No: 47120/78 but various other types of livestock houses or units could be used.

However, it will be appreciated that the utilisation and provision of an earlier weaning rearing unit and separate follow-on housing results in the disadvantage that in adverse weather conditions energy would have to be utilised to maintain satisfactory temperature conditions in both the rearing unit and the follow-on housing thereby affecting the operating costs, and the object of this invention is to provide a rearing unit in which this disadvantage is alleviated.

According to this invention, a rearing unit for animals such as piglets comprises a substantially closed body having a first portion containing at least one cage or pen for housing piglets at an early stage of their development, a second portion containing at least one cage or pen for housing piglets at a later stage of their development, heating means for heating the air in or supplied to the first portion of the body, air extraction means for withdrawing air from the first portion of the body, and air flow control means for supplying at least part of the air withdrawn from the first portion to the second portion of the body.

Preferably, the air extraction means is adapted to withdraw air from the first portion of the body and expel the air to the exterior of the unit _via_ the air flow control means. Preferably, also, the air flow control means comprises valve means which is adapted to control the volume of air from the air extraction means which is supplied to the second portion of the body.

The first portion of the body is, preferably, provided with air inlet means through which air is drawn into said first portion by the air extraction means. Preferably, the air inlet means includes a choke or restriction to air flow and may be disposed at one end of the first portion of the body, and the air extraction means may be disposed at the opposite end of said first portion.

Preferably, also, the heating means is mounted in a preheating chamber formed at the end of the first portion of the body having the air inlet means provided therein. The heating means and the air extraction means are, preferably, controlled by a temperature and/or humidity sensing device mounted in the first portion of the body.

Preferably, the second portion of the body is provided with a further air extraction means for withdrawing air therefrom and for expelling the air to the exterior of the body. Preferably, also, additional air inlet means is provided through which additional air can be drawn into the second portion of the body by the further extraction means. The additional air inlet means is, preferably, disposed in the upper portion of the unit and the further air extraction means is disposed in the lower portion of the unit.

Preferably, the further air extraction means and/or the air flow control means is or are controlled by a temperature and/or humidity sensing device mounted in the second portion of the body.

The body of the unit is, preferably, substantially rectangular; and the first and second portions thereof may be disposed in end-to-end, or side-by-side relationship. Preferably, the first and second portions are separated from each other by a partition wall having transfer means formed therein to enable piglets to be transferred from the first to the second portion of the body. The transfer means, preferably, comprises at least one door or flap provided with sealing means so that in the closed position, a substantially air tight seal is formed therearound.

A preferred embodiment of this invention will now be described, by way of example only, with reference to the accompanying drawings of which:-

Figure 1 is a side elevation of a rearing unit;

Figure 2 is a diagrammatic sectional plan view of the rearing unit; and

Figure 3 is a diagrammatic side elevation of a central portion of the rearing unit to an enlarged scale. .

- 4 -

Referring now to the drawings, a unit for rearing animals such as piglets comprises a substantially closed rectangular wooden body indicated generally at 10 which is mounted on two spaced-apart longitudinally extending skid members 12. The unit is capable of being moved slidably on the skid members 12 to enable it to be located in a required position on, for example, a concrete base (not shown). The body 10 comprises a floor structure 14 having two end walls 16, 18 and two side walls 20, 22 extending upwardly from the edges of the floor structure 14. A roof 23 extends between the upper edges of the end walls 16, 18 and the side walls 20, 22 to complete the enclosed body 10.

The body 10 is divided into a preheating chamber 24 and first and second portions 26 and 28 by partition walls 30 and 32 which each extend transversely of the body 10 between the side walls 20 and 22.

The first portion 26 of the body 10 has a series of cages or pens 34 disposed therein which, conveniently, extend longitudinally of the portion 26. The cages or pens 34 are arranged in three or more tiers and have sides formed of wire to allow the free passage of air therethrough. Each cage or pen 34 has a floor formed of expanded metal sheet which allows the animal excreta to pass therethrough into a tray (not shown) secured beneath the floor of the cage or pen 34. A pipe (not shown) is connected to the or each tray to enable at least liquid animal excreta to pass therethrough to the exterior of the unit. A feeding trough (not shown) is also provided on each cage or pen 34 and extends for the full length of one side of the associates cage or pen. These cages or pens 34 are designed so as to be capable of housing therein piglets during an early stage of their development.

An air intake 36 is formed in the end wall 16 of the body 10 and provides a U or S shaped path through which air can flow from the exterior of the body 10 into the
preheating chamber 24. The air intake thus forms a
choke or restriction to air flow which facilitates
controlling the volume of air flowing through the first
portion 26 of the unit. The preheating chamber 24 has
one or more air heaters (not shown) mounted therein
such as, for example, propane gas-fired heaters, and
the/or each air heater is adapted to heat the air which
is drawn through the preheating chamber 24. An air
inlet aperture 38 is formed in the partition wall 30
and conveniently comprises one or more grilles through
which air can flow from the preheating chamber 24 into
the portion 26 of the body 10.

An air extraction unit indicated generally at 40
is provided on the partition wall 32 on the side thereof
remote from the portion 26 of the body 10. An air outlet
aperture 42 is formed in the partition wall 32 and air
from the portion 26 is drawn through the aperture 42 by
the air extraction unit 40. The air extraction unit 40
includes an electrically operated extraction fan 44
which is arranged to discharge air through an outlet 46
formed in the roof 23 of the unit. The outlet 46 is
provided with a cowling 48 which is designed to inhibit
the reverse flow of air therethrough. The air extraction
unit 40 has a pivotally mounted flap valve 50 disposed therein
which is adjustable so as to be capable of deflecting all
or part of the air discharged by the extraction fan 44
through one or more grilles 52 formed in the side of the
unit 40 adjacent to the second portion 28 of the body 10.
The louvres in the or each grille 52 are arranged to slope
downwardly in a direction extending from the air extraction
unit 40 towards the second portion 28 of the body 10 so
that air flowing therethrough into the second portion 28
of the body 10 is downwardly directed.

- 6 -

Two rows of cages or pens 54 are disposed in the second portion 28 of the body 10 and extend along each side wall 20, 22 over substantially the entire length thereof. The cages or pens 54 are provided with removable partitions or divisions 56 so that the sizes of the portions of the cages or pens 54 can be varied. A central walkway 58 is formed between the cages or pens 54 to provide each access thereto. Conventional watering and feeding troughs (not shown) are provided along the sides of the cages or pens 54 adjacent to the walkway 58.

Four spaced-apart air inlets 60 are formed in the roof 23 on the centre line thereof and each air inlet 60 is provided with a cowling 62 to restrict or prevent the creation of draughts in the portion 28 of the body 10. Each air inlet 60 is provided with electrically-operated valve means (not shown) which is adapted in the event of a power failure to automatically open and permit air to flow out of the air inlets 60 from the portion 28 of the body 10 to provide emergency ventilation.

An electrically operated air extraction fan 64 is mounted in the floor structure 14 and the fan 64 is disposed centrally of the portion 28 beneath the walkway 58. The fan 64 is connected by ducting (not shown) formed in the floor structure 14 to air outlet apertures (not shown) disposed adjacent to the side walls 20 and 22. The air extraction fan 64 is adapted to discharge air from the portion 28 into the free air space formed beneath the unit. Air is thus drawn into the portion 28 of the body 10 through the air inlets 60 and the positioning of the air outlet apertures in the lower portion of the body adjacent to the side walls 20 and 22 results in the air flow in the portion 28 being directed downwardly and outwardly from the centre line of the roof 23 towards the side edges of the floor structure 14 prior to the air being extracted therefrom through the ducting and then expelled by the fan 64 beneath the unit.

Each row of cages or pens 54 has a perforated or slatted floor to enable at least liquid animal excreta to pass therethrough. A trough is formed beneath each cage or pen 54 to collect the animal excreta and drain means may be provided for continuously draining at least the liquid animal excreta to the exterior of the body 10. The troughs (not shown) may also be utilised to form an air outlet passage communicating with the air outlet apertures and additional air outlet apertures may be formed in the upper surface of the troughs adjacent to the side walls 20 and 22 of the unit.

The partition wall 32 is provided with doors or flaps 66. Each door or flap is disposed in the partition wall 32 so that when the foor or flap is opened piglets can be passed from the portion 26 of the body 10 directly into one of the cages or pens 54. It will be appreciated that if the divisions 56 are opened or removed, it is possible for piglets to be passed through the associated door or flap 66 and for the piglets to be easily moved down the length of the associated cage or pen 54 towards the end wall 18 of the unit. Each door or flap 66 is provided with sealing means so that when the door or flap is closed a substantially air tight seal is formed therearound.

Control means are provided in the preheating chamber 24 for controlling the operation of inter alia the air heaters, the air extraction unit 40, the flap valve 50, and the extraction fan 64 in accordance with signals received from temperature and/or humidity sensing devices disposed in the portions 26 and 28 of the body 10 to control not only the rate of air flow through each of the portions 26 and 28 of the body 10 but also control the temperature and humidity of the air in said portions of the unit.

Doors 68 are provided in the end wall 18, the side wall 22 and the partition wall 30 of the unit to provide access for operatives to the preheating chamber 24, the first portion 26 and the second portion 28 of the body 10 of the unit.

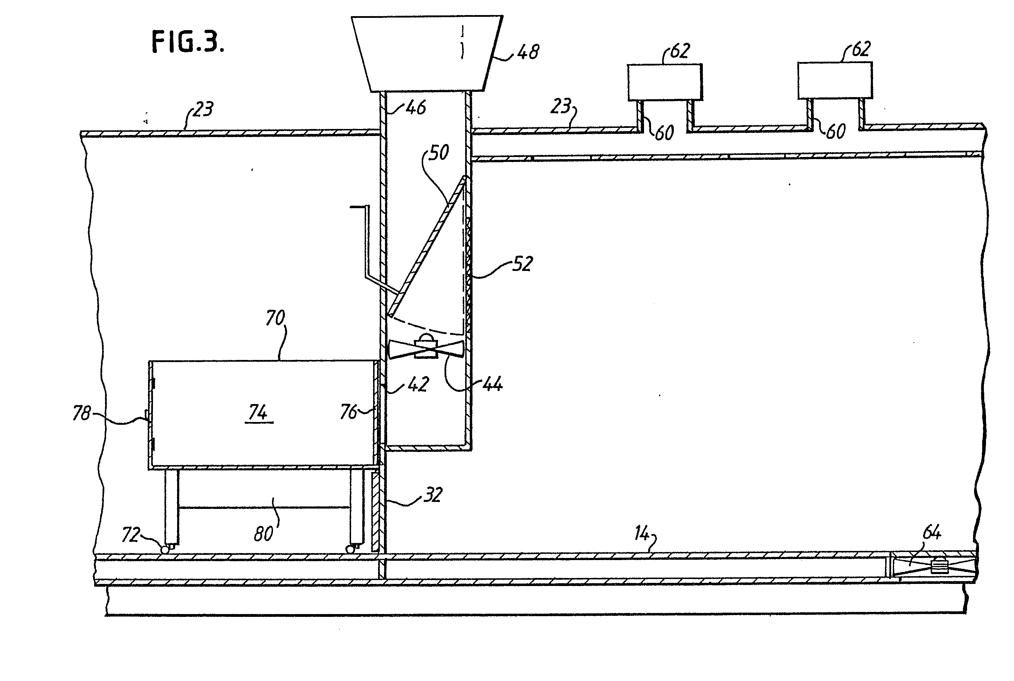

It will be appreciated that in adverse weather conditions where it is necessary to provide heating for not only the piglets in the cages or pens 34 which are at an early stage of their development but also to provide heating for the larger piglets in the cages or pens 54, it is possible to place the flap valve 50 in the position shown in Figure 3 of the drawings so that all of the heated air extracted from the portion 26 of the unit by the extraction fan 44 is directed through the grille 52 into the portion 28 to form a source of heated air. Although additional heating means such as gas-fired heaters or electrically operated heaters (not shown) can be provided in the portion 28 of the body 10, the utilisation of the heated air from the portion 26 of the body 10 reduces the energy required to heat the portion 28 of the body 10 thereby effecting savings in the operating costs of the unit.

In conditions where the maximum cooling or ventilation of the portions 26 and 28 of the unit are required, the flap valve 50 can be placed in the position shown in broken lines in Figure 3 of the drawings so that substantially all of the air extracted from the portion 16 of the body 10 is expelled through the outlet 46. The positioning of the louvres in the grille 52 also assists in ensuring that a minimal amount of heated air will enter the portion 28 of the body 10 when the flap valve 50 is in the position shown in broken lines in Figure 3 of the drawings and therefore maximum cooling and ventilation of the portion 28 of the body 10 can be achieved.

In intermediate weather conditions, it will be appreciated that the flap valve 50 can be disposed in positions between the two extremes shown in Figure 3 of the drawings to arrange for a proportional amount of heated air from the portion 26 of the body 10 to be directed into the portion 28 of the unit.

Although it is envisaged that the position of the flap valve 50 will be controlled automatically by the units control means, in a modification, the flap valve 50 may be controlled by an expanding strut mechanism which operates in accordance with the temperature in the portion 28 of the unit or, alternatively, the position of the flap valve 50 may be manually adjusted.

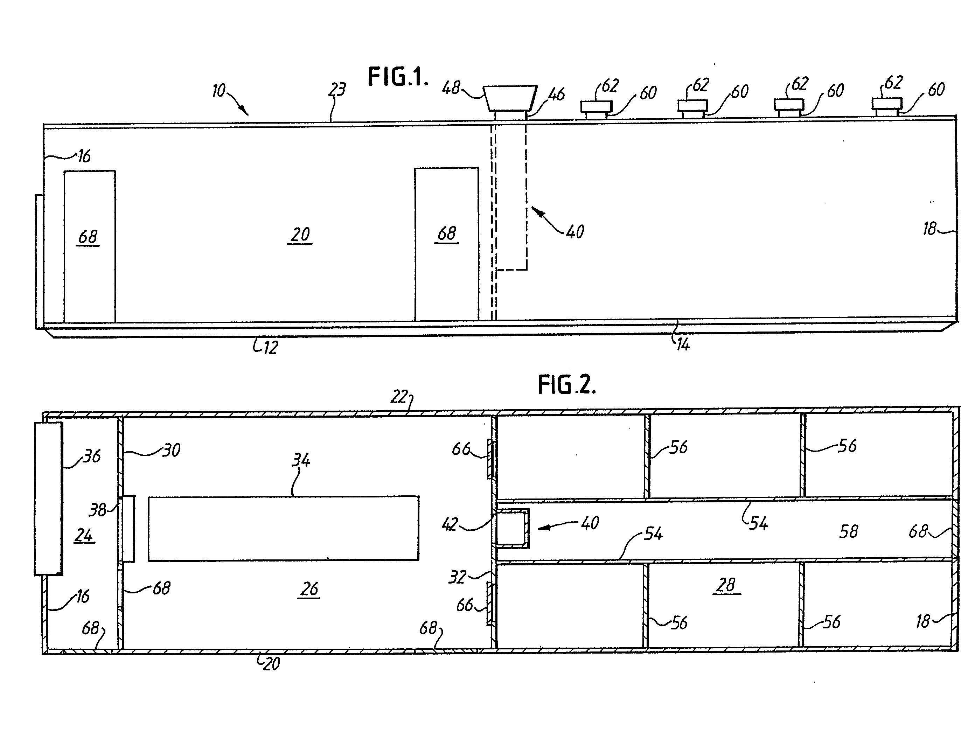

In a further modification, a transfer unit is provided which consists of a mobile trolley 70 shown in Figure 2 of the drawings. The trolley 70 is mounted on castors 72 and is utilised to facilitate the transfer of piglets from the cages 34 in the portion 26 of the unit to the cages or pens 54 in the portion 28 of the unit. The trolley 70 is provided with an enclosed upper portion 74 in the form of a box or tunnel which is equipped with connecting means 76 at one end to enable the trolley 70 to be connected in sealing engagement with the partition wall 32 when one of the door or flaps 66 therein has been opened. The opposite end of the portion 74 of the trolley is provided with a door 78 for closing the end of the box or tunnel once the piglets have been inserted therein.

The area of the trolley 70 is arranged to be large enough for the piglets from an entire section of the cages or pens 34 to be inserted therein. A disinfectant spray or other de-contamination means (not shown) is mounted on the trolley 70 and is adapted to de-contaminate the piglets in the trolley 70 prior to their transference into the cages or pens 54 in the portion 28 of the unit. A reservoir 80 is disposed in the lower portion of the trolley 70
to collect the used disinfectant.

The provision of a self-contained mobile de-
contamination trolley enables a single trolley to
be used selectively for transferring piglets into
either one of the rows of cages or pens 54 and also
the mobile nature of the trolley enables it to be taken
out of one rearing unit and to be utilised in a
separate similar unit after it has been cleaned and
disinfected to avoid any danger that the piglets in
one unit would be subject to infection being transferred
to them from piglets in another separate unit.

Claims.

1. A rearing unit for animals such as piglets comprising a substantially closed body having a first portion containing at least one cage or pen for housing piglets at an early stage of their development, a second portion containing at least one cage or pen for housing piglets at a later stage of their development, heating means for heating the air in or supplied to the first portion of the body, air extraction means for withdrawing air from the first portion of the body, an air flow control means for supplying at least part of the air withdrawn from the first portion to the second portion of the body.

2. A rearing unit according to Claim 1, wherein the air extraction means is adapted to withdraw air from the first portion of the body and expel the air to the exterior of the unit via the air flow control means.

3. A rearing unit according to Claim 1 or Claim 2, wherein the air flow control means comprises valve means which is adapted to control the volume of air from the air extraction means which is supplied to the second portion of the body.

4. A rearing unit according to any one of the preceding claims, wherein the first portion of the body is provided with air inlet means through which air is drawn into said first portion by the air extraction means.

5. A rearing unit according to Claim 4, wherein the air inlet means includes a choke or restriction to air flow.

6.    A rearing unit according to Claim 4 or Claim 5,
wherein the air inlet means is disposed at one end
of the first portion of the body and the air extraction
means is disposed at the opposite end of said first
portion.

7.    A rearing unit according to any one of Claims 4
to 6, wherein the heating means is mounted in a
preheating chamber formed at the end of the first
portion of the body having the air inlet means
provided therein.

8.    A rearing unit according to any one of the preceding
claims, wherein the heating means and the air extraction
means are controlled by a temperature and/or humidity
sensing device mounted in the first portion of the body.

9.    A rearing unit according to any one of the preceding
claims, wherein the second portion of the body is provided
with a further air extraction means for withdrawing air
therefrom and for expelling the air to the exterior of
the body.

10.    A rearing unit according to Claim 9, wherein additional
air inlet means is provided through which additional air
can be drawn into the second portion of the body by the
further air extraction means.

11.    A rearing unit according to Claim 9 or Claim 10,
wherein the additional air inlet means is disposed in the
upper portion of the unit and the further air extraction
means is disposed in the lower portion of the unit.

12.  A rearing unit according to any one of Claims 9 to 11, wherein the further extraction means and/or the air flow control means is or are controlled by a temperature and/or humidity sensing device mounted in the second portion of the body.

13.  A rearing unit according to any one of the preceding claims, wherein the body of the unit is substantially rectangular; and the first and second portions thereof are disposed in end-to-end, or side-by-side relationship.

14.  A rearing unit according to any one of the preceding claims, wherein the first and second portions are separated from each other by a partition wall having transfer means formed therein to enable piglets to be transferred from the first to the second portion of the body.

15.  A rearing unit according to Claim 14, wherein the transfer means comprises at least one door or flap provided with sealing means so that in the closed position, a substantially air tight seal is formed therearound.

FIG.1.

FIG.2.

FIG.3.